# EUROPÄISCHE PATENTSCHRIFT

(11) **EP 1 060 067 B1**
(45) Veröffentlichungstag und Bekanntmachung des Hinweises auf die Patenterteilung: **30.10.2002**
(21) Anmeldenummer: 99916817.2
(22) Anmeldetag: 04.03.1999
(51) Int. Cl.: B29C 47/22

(54) **EXTRUSIONSKOPF**
EXTRUSION HEAD
TETE D'EXTRUSION

(30) Priorität: 05.03.1998 DE 29803780 U
(43) Veröffentlichungstag der Anmeldung: 20.12.2000
(73) Patentinhaber: MAUSER-WERKE GmbH & Co. KG, 50321 Brühl (DE)
(72) Erfinder: PRZYTULLA, Dietmar, D-50171 Kerpen (DE); LANGOS, Peter, D-53757 St. Augustin (DE)
(86) Internationale Anmeldenummer: EP9901398
(87) Internationale Veröffentlichungsnummer: WO99044805

(56) Entgegenhaltungen:
- EP-A- 0 478 957
- EP-A- 0 885 711
- DE-A- 2 654 001
- US-A- 3 114 932

## Beschreibung

Die Erfindung bezieht sich auf einen Extrusionskopf zur Erzeugung eines schlauchförmigen Vorformlinges für die Herstellung von blasgelormten Kunststoff-Hohlkörpern, mit einer verstellbaren ringförmigen Schlauchaustrittsdüse mit kreisringförmig umlaufenden Düse/Dornspalt-Einstellelementen, die eine gezielte Einstellung des Düsenspaltes zur Veränderung der Wanddicke des austretenden Vorformlinges ermöglichen.

Typische Blasteile aus thermoplastischem Kunststoff, bei denen üblicherweise eine gezielte Wanddickeneinstellung in Schlauchlängsrichtung und Schlauchumfangsrichtung vorgenommen wird, sind großvolumige Behälter wie zum Beispiel Kanister, Deckelfässer, Spundfässer oder Innenbehälter für Palettencontainer. Beim Ausstoßen des schlauchförmigen Vorformlings für derartige Blasteile wird über eine rotationssymmetrische Düse/Dornspaltsteuerung die Wanddicke des Schlauches in Schlauchlängsrichtung unten etwas dünner und nach oben zur Ausstoßdüse hin etwas dicker eingestellt, da der Schlauch sich beim Hängen durch sein Eigengewicht von selber längt und automatisch eine Vergleichmäßigung der axialen Wanddicke erfolgt. Dazu überlagert wird im Schlauch mittels einer Doppel-Düse/Dornspalteteuerung in den Schlauchteilen, die im geblasenen Hohlkörper für die Kopf- und Bodenbereiche mit stark unterschiedlichen Streckungsgraden - insbesondere in den um 90° zur Teilungsebene der Blasformhälften versetzten Bersichen - vorgesehen sind, in Schlauchumfangsrichtung eine partielle Wanddickensteuerung vorgenommen. Derartige Blasteile können also mit bisher bekannten Doppel-Düse/Dornspalt-Steuerungen (= zwei Steuermöglichkeiten) in ihrer Wanddicke über ihre Länge
- gleichmäßig in ihrer Radial-Wanddicke,
- in ihrer Radial- und Umfangs-Wanddicke,
- in ihrer radialen Wanddicke mit axial durchgehenden Dick- und Dünnstellen und
- mit partiellen Längs-Dick-/Dünnstellen gesteuert werden.

Für derartige Schlaucheinstellungen mit Düse/Dornspaltsteuerung sind verschiedene Konstruktionsvarianten von Extrusionsköpten, so z. B. aus der DE-PS 26 54 001, der US 3 114 932 oder US 1 107 628 bekannt. Für normale Anwendungsfälle funktionieren einfache bekannte oder die Doppel-Düsensteuerungen in ausreichender Weise, allerdings fehlt ihnen die Möglichkeit, irgendwelche weiteren zusätzlichen Wanddickenbeeinflussungen vorzunehmen. Aus der britischen Patentschrift 1,107,628 ist weiterhin ein einfacher Extrusionskopf bekannt, mittels dem eine Verzahnung bzw. Verrippung im extrudierten Schlauch für aus thermoplastichem Kunststoff blasgeformte Flaschen erzeugt werden kann. Mit den in der Ausstoßdüse V-förmig ausgebildeten Nuten und Zähnen soll den geblasenen Flaschen insbesondere ein dekoratives Aussehen verliehen werden. Der Zentraldorn kann axial verstellt werden, um die Verzahnung auf den ausgestoßenen Schlauch einwirken zu lassen oder nicht. Eine weitere Verstellmöglichkeit bzw. Einflußnahmemöglichkeit zu einer gezielten Wanddickeneinstellung ist hierbei jedoch nicht möglich.

Es ist Aufgabe der vorliegenden Erfindung, die erwähnten Nachteile des Standes der Technik zu beseitigen und den eingangs beschriebenen gattungsmäßigen Extrusionskopf mit Doppel-Düee/Dornspaltsteuerung derart weiter auszubilden, daß eine weitere zusätzliche überlagerte Wanddickeneinstellung des ausgestoßenen Schlauches für großvolumige Kunststoff-Behälter wie 220 Liter Fässer und - insbesondere auch für unsymmetrische technische Teile wie z. B. Kunststoff-Kraftstofftanks (KKB's) oder für spezielle Applikationen bei großen zylinderförmigen Blasteilen ermöglicht wird.
Diese Aufgabe wird erfindungsgemäß dadurch gelöst, daß wenigstens drei separate und unabhängig voneinander zu steuernde, unterschiedlich profilierte, verstellbare
Düse/Dornspalt-Einstellelemente (D0 = Dorn, DS I, DS II, DS III) vorgesehen sind, die einzeln oder/und gleichzeitig im Düsenspalt von innen oder/und außen in Wirkeingriff auf den austretenden Vorformling bringbarsind.
Dadurch, daß die Schlauchaustrittsdüse mit einer Dreifach-Düse/Dornspalt-Steuerung ausgestattet ist, lassen sich je nach geblasenem Hohlkörper in Abhängigkeit von der Profilierung des dritten Düse/Dornspalt-Einstellelementes bzw. weiterer Einstellelemente und der Dauer des Eingriffes bzw. der Einwirkung auf den extrudierten Vorformling spezielle Dickstellen an besonderen Stellen des Schlauches derart einstellen, daß der fertig geblasene Hohlkörper nur in gewünschten Wandungsbereichen im Vergleich zur Mindestwandstärke der üblichen Wandung unterschiedliche bzw. dickere Wandstärken aufweist.
Ein Kanister kann z. B. nur in den vertikalen Eckbereichen mit Versteifungsrippen ausgestattet werden. Bei einem KKB kann z. B. in seitlichen Bereichen des Oberbodens, bzw. an den Stellen, an denen Kraftstoffleitungs-Anschlußstutzen angeblasen werden oder Meßinstrumente für eine Tankfüllstandsanzeige installiert werden sollen, die Wandstärke gezielt dicker und damit stabiler ausgebildet sein. Für Spundfässer oder Deckelfässer können z. B. unter Beibehaltung desbisherigen Faßkörpergewichtes durch eine gezielte Materialumverteilung ein rippenartiger Wandungsaufbau nur in den vertikalen Wandungsbereichen mit gleichmäßiger Dick/Dünn-Verteilung eingestellt werden, wodurch die Behältersteifigkeit und insbesondere die Stapelbelastbarkeit bei heißabgefülltem Füllgut spürbar verbessert wird. Dies ist insbesondere für großvolumige Fässer (220 L) von ganz besonderer Bedeutung. Bemerkenswert hierbei ist, daß die Maßnahmen zur Qualitätsverbesserung des geblasenen Kunststoff-Hohlkörpers ausschließlich an dem austretenden Vorformling und nicht etwa durch konstruktive Umgestaltung der Blasform selber erfolgen.
Wie nur beispielhaft aufgezeigt wurde, ergeben sich mit den neuen erfindungsgemäßen Dreifach- bzw. Mehrfach-Düse/Dornspalt-Einstellelementen auf vorteilhafte Weise eine Vielzahl von neuen Anwendungsmöglichkeiten für großvolumige Kunststoff-Blasteile aller Art (z. B. KFZ-Zubehörteile o. ä.).
Die Ausstattung eines Extrusionskopfes mit den neuen erfindungsgemäßen Dreifach-Düse/Dornspalt-Einstellelementen im Vergleich zu einem bekannten Extrusionskopf mit bisherigen Zweifach-Düse/Dornspalt-Einstellelementen ist dabei vergleichsweise preisgünstig zu realisieren und erfordert keine wesentlichen maschinellen Investitionskosten. Die Einstellelemente werden nur über sehr kurze Wegstrecken bewegt, es genügen einfache Stellmotoren, und es finden keine Deformationen der Einstellelemente statt.

Das erfindungsgemäße Verfahren zur Herstellung von blasgeformten Kunststoff-Hohlkörpern auf einer Blasformmaschine mit Extruder, Extrusionskopf mit Umfangsverteiler und entsprechender Blasform, wobei während des Ausstoßens des schlauchförmigen Vorformlinges aus dem Extrusionskopf mittels Verstellung des Düse/ Dornspaltes eine gezielte Einstellung der Wanddicke des ausgestoßenen Vorformlinges vorgenommen wird, zeichnet sich insbesondere dadurch aus, daß durch eine sequenzielle oder gleichzeitige Einwirkung von drei unterschiedlich profilierten, separat verstellbaren Düse/Dornspalt-Einstellelementen eine beliebige, auf dem Umfang unterschiedliche Dick-Dünn-Einstellung des schlauchförmigen Vorformlinges erreicht werden kann. Diese mehrfache Einstellbarkeit des Schlauches für großvolumige Fässer ist bisher einmalig und in der Qualität der Fässer unerreicht.

Die Erfindung wird nachfolgend anhand von in den Zeichnungen nur schematisch dargestellten Ausführungsbeispielen näher erläutert und beschrieben. Es zeigen :
- Figur 1: einen erfindungsgemäßen Extrusionskopf in Teilschnitt-Darstellung,
- Figur 2 bis Figur 6: den Extrusionskopf gem. Fig 1 mit verschiedenen Funktionspositionen der Einstellelemente,
- Figur 7 bis Figur 9: eine abgewandelte Ausführungsform eines Extrusionskopfes mit verschiedenen Funktionspositionen der Düse/Dornspalt-Einstellelemente,
- Figur 10: eine weitere abgewandelte Ausführungsform eines Extrusionskopfes,
- Figur 11: eine vierte abgewandelte Ausführungsform eines Extrusionskoptes,
- Figur 12 bis Figur 15: eine fünfte abgewandelte Ausführungsform eines Extrusionskoptes mit verschiedenen Funktionspositionen der Düse/Domspalt-Einstellelemente,
- Figur 16: ein Deckelfaß als geblasener Hohlkörper,
- Figur 17: ein Fassett (Hochformatkanister) als geblasener Hohlkörper,
- Figur 18: einen Kanister (jerrican) als geblasener Hohlkörper,
- Figur 19: einen schlauchförmiger Vorformling mit Querschnitten und
- Figur 20: einen schematisch dargestellten Kunststoff-Kraftstoff-Behälter (KKB) mit Querschnittsdarstellung

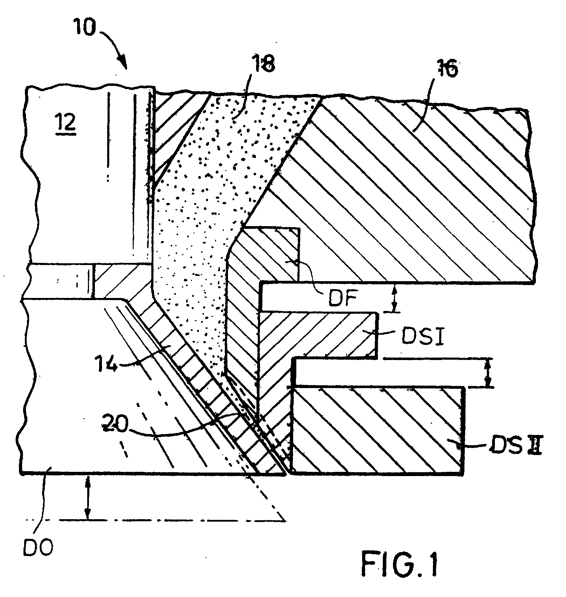

In Figur 1 ist ein Extrusionskopf 10 ausschnittsweise mit drei verstellbaren Düse/Dornspalt-Einstellelemente D0, DS I und DS II in der Grundposition "Düsenspalt zu" dargestellt. Zentralmittig im Extrusionskopf 10 ist ein axial verstellbarer Dornhalter 12 angeordnet, an dessen Unterseite ein kegelstumpfartiger Dorn 14 als erstes Düse/Dornspalt-Einstellelemente Dnull (= D 0) leicht lösbar bzw. auswechselbar befestigt ist. Außenseitig wird der Extrusionskopf von einem Gehäuse 16 umschlossen. Im Gehäuse 16 befindet sich ein hohlzylinderförmiger Speicherraum 18 im weichem das aus einem oder mehreren Extrudern in den Extrusionskopf geförderte schmelzflüssige Kunststoffmaterial umfangsverteilt wurde. Der Speicherraum 18 mündet in einen kreisringförmigen Düsenspalt 20, der innenseitig von dem Dorn 14 bzw. dem ersten Düse/Dornspalt-Einstellelement D 0 und außenseitig von einem gehäusefesten Düsen-Ringstück DF und zwei verstellbaren Düse/Dornspalt-Einstellelemente, nämlich dem Düsenschieber 1 = DS I und dem Düsenschieber 2 = DS II begrenzt wird. Wie der verstellbare Dorn 14 sind auch die axial verstellbaren Einstellelmente DS I und DS II leicht lösbar und damit leicht auswechselbar am Extrusionskopfgehäuse befestigt. Die axiale Verstellbarkeit bzw. exakte Positionseinstellung der verstellbaren Düse/Dornspalt-Einstellelemente kann z. B. hydraulisch oder elektromotorisch erfolgen. Weiterhin ist auch das gehäuseteste Düsen-Ringstück DF leicht lösbar bzw. auswechselbar am Extrusionskopfgehäuse befestigt.
Dies dient insbesondere dazu, bei einem Produktwechsel bzw. Austausch der nachgeschalteten Blasformhälften auch die auf das jeweilige Produkt zugeschnittenen und dementsprechend profilierten Ringstücke und Einstellelemente des Düsenspaltes schnell austauschen zu können.
Bei dem in Fig. 1 dargestellten Extrusionskopf 10 sind alle Düse/Dornspalt-Einstellelemente in ihre Grundposition "Düsenspalt zu" zurückgefahren, d. h. der Dom D 0 ist ganz nach oben und die Düsenschieber = Einstellelemente DS I und DS II sind ganz nach unten gefahren. Durch die entsprechenden Pfeile sind die jeweiligen Weglängen = Verstellbarkeit der Einstellelemente angedeutet. Bei dem dargestellten Ausführungsbeispiel sind die den Düsenspalt begrenzenden Oberflächen der festen Düsen-Ringstückes DF und des Einstellelementes DS I profiliert und die den Düsenspalt begrenzenden Oberflächen des Dornes D 0 und des Einstellelementes DS II umlaufend glatt ausgebildet, wie an den nachfolgenden Figuren weiter erläutert wird.

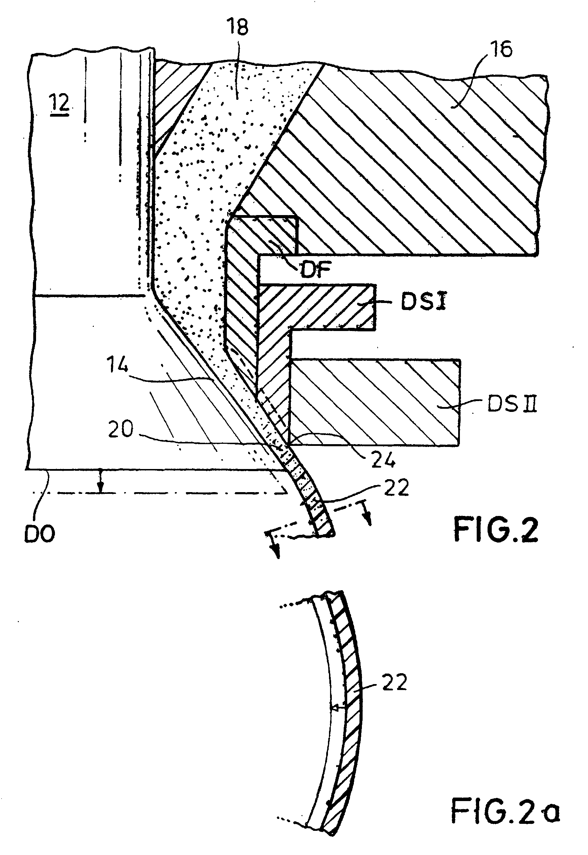

In Figur 2 ist lediglich der Dorn 14 um ein Stück nach unten gefahren (siehe Pfeil). Der Düsenspalt 20 wird außenseitig durch die untere innere, glatt umlaufende Kante 24 des Düsenschiebers DS II und innenseitig von dem Dorn 14 begrenzt. Der austretende Schlauch 22 ist über den Umfang gleichmäßig dünn ausgebildet. In dem darunter gezeichneten Teilschnitt durch den Schlauch 22 ist mittels eines kleinen Pfeiles angedeutet, wie dick der Schlauch gefahren werden kann, wenn der der Dorn ganz nach unten gefahren und der Düsenspalt voll geöffnet ist.

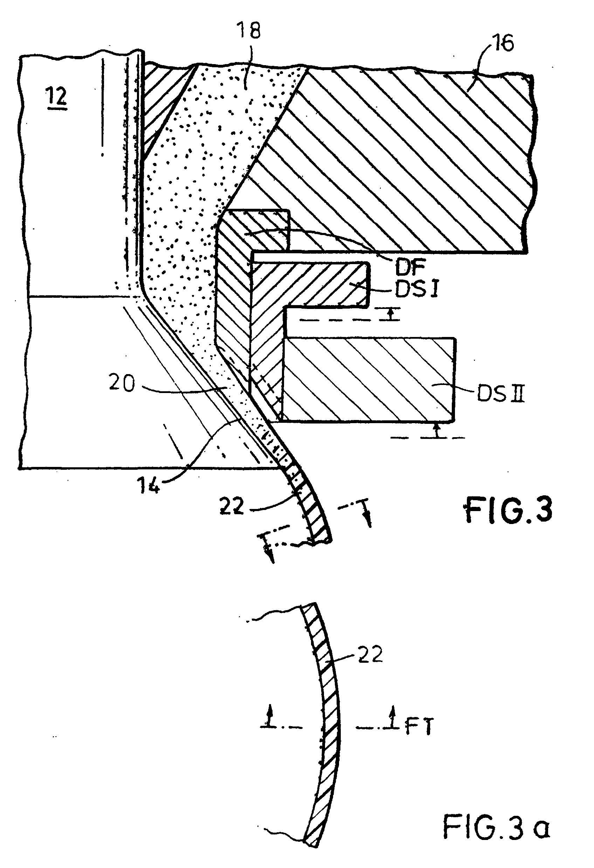

In Figur 3 ist nun das Einstellelement DS I zusammen mit dem Einstelletement DS II um ein Stück nach oben gefahren (siehe Pfeil), so daß diese beiden Einstellelemente sich zur Zeit nicht in einer Wirkeingriffsposition mit dem austretenden schlauchförmigen Vorformling 22 befinden. Der Düsenspalt 20 wird nun durch den Dorn 14 und das profilierte gehäusefeste Ringstück DF begrenzt. Der aus dem Düsenspalt austretende Schlauch ist nun in Umfangsrichtung nicht mehr gleichmäßig dick ausgebildet, sondern ist in zwei sich gegenüberliegenden Bereichen etwas dünner als in den dazu jeweils um 90° versetzt angeordneten Schlauchbereichen ausgebildet. Eine derartige doppel-ovale Einstellung des Düsenspaltes bzw. ovale Wanddickeneinstellung in Bereichen des Schlauches ist bei Blasteilen mit flachem Ober- und Unterboden allgemein üblich. Dabei werden die beiden sich gegenüberliegenden Schlauchbereiche 26 mit dickerer Wandung so zwischen die geöffneten Blasformhälften geführt, daß aus ihnen die um 90° zur Formteilungsebene liegenden horizontalen Behälterwandungsbereiche mit den größten Streckungsgraden bzw. Aufblaswegen des Kunststoffmateriales geblasen werden. Diese Maßnahme dient also zur Vergleichmäßigung der Wandstärke im fertigen Behälter, so daß die Behälterwandung in Eckbereichen mit hohen Streck- oder Reckgraden nicht dünner ausfällt als in den übrigen Wandungsteilen. Die Darstellung in Fig. 3 zeigt einen Schnitt durch den dünneren Schlauchbereich (und Extrusionskopf), der in der Blasform in der Formteilebene zur Anlage an die Blasformwandung gelangt.

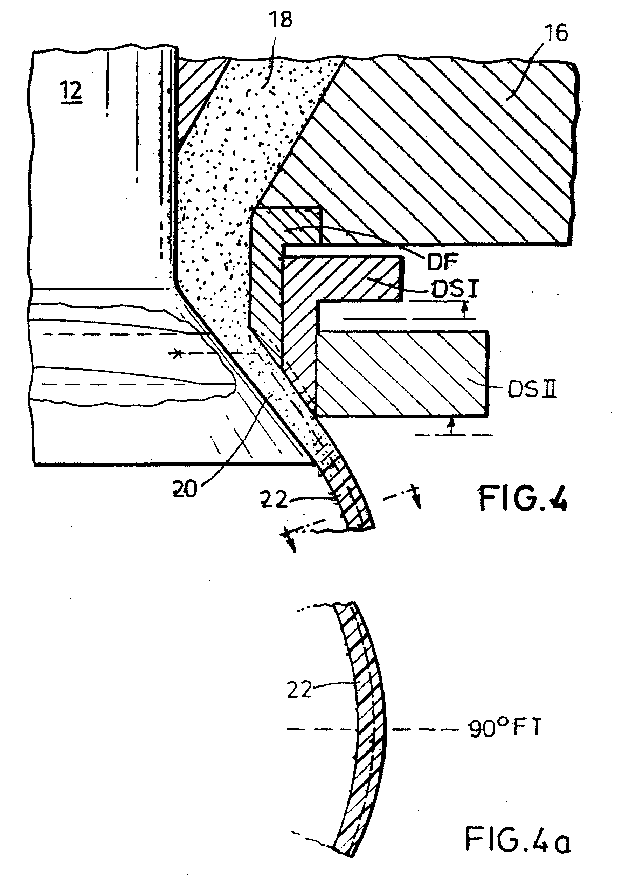

In Figur 4 ist die Stellung der Düse/Dornspalt-Einstellelemente gegenüber Fig. 3 unverändert, lediglich der Schnitt ist um 90° versetzt durch den Extrusionskopf und damit durch einen dickeren Wandungsbereich 26 des Schlauches 22 gelegt, wie aus der unteren Teilschnittdarstellung durch den Schlach 22 deutlich wird. Links neben dem profilierten Ringstück DF ist in einer Abwicklung die bekannte wellenförmige Profilierung der inneren Düsenfläche des Ringstückes DF angedeutet.

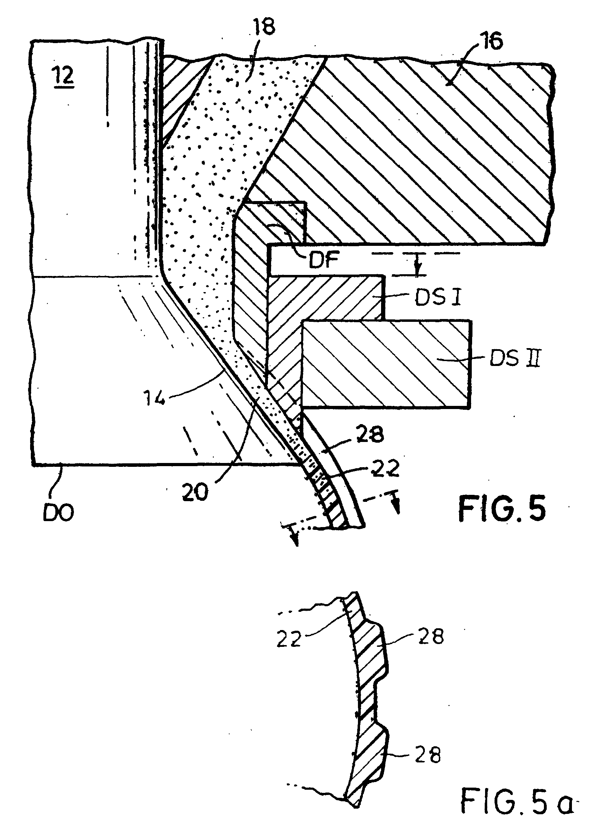

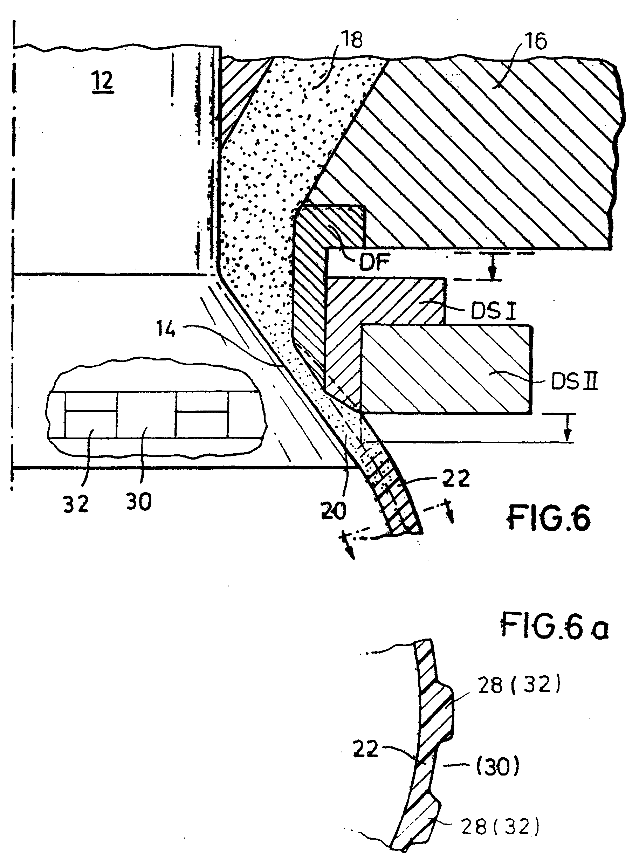

In Figur 5 und Figur 6 ist nunmehr der profilierte Düsenschieber DS I nach unten gefahren und befindet sich in Wirkeingriff auf den austretenden Kunststoff-Schlauch, während der Düsenschieber DS II nach wie vor in seiner vorherigen oberen, außerhalb eines Wirkeingriffes befindlichen Position verblieben ist. Die Proflilierung des DS I besteht hier aus einem umlaufenden Zahnprofil, wie es aus den unteren Teilschnittdarstellungen durch den austretenden Schlauch 22 deutlich wird. Dabei formen die Zähne 30 der Profilierung eine dünnere Schlauchwanddicke und in den Zahnlücken 32 wird eine größere Schlauchwanddicke mit nach außen hervorstehenden Rippen 28 ausgebildet. In Fig. 5 ist der Schnitt durch den Extrusionskopf bzw. den Schlauch 22 im Bereich einer dünneren Schlauchwandung (Zahneinwirkung 30) und in Fig. 6 um ein kleines Stückchen versetzt im Bereich einer dickeren Schlauchwandung (Zahnlückenauswirkung 32) mit ausgeprägter Ausbildung von Längsrippen 28 gelegt. Die Profilierung in dem festen Düsen-Ringstück DF wie auch indem Düsenschieber DS I kann schräg nach außen aufgeweitet oder einfach parallel zur Oberfläche des Dornes 14 verlaufen. In Fig.6 ist durch den kleinen Pfeil unterhalb des Düsenschiebers DS II angedeutet, wie tief die Zähne 30 der Zahnprofilierung des Düsenschiebers DS I von außen in den Schlauch 22 einwirken. Links neben dem Düsenschieber DS I ist in schematischer Darstellung als Abwicklung die Ansicht der Zahnprofilierung des DS I mit Zähnen 30 und Zahnlücken 32 verdeutlicht. Bei dieser Ausführungsform dient der unterste unprofilierte Düsenschieber DS II eigentlich nur als Glättelement, bzw. um die Profilierungen des Ringstückes DF oder/und des Düsenschiebers DS I abzudecken.

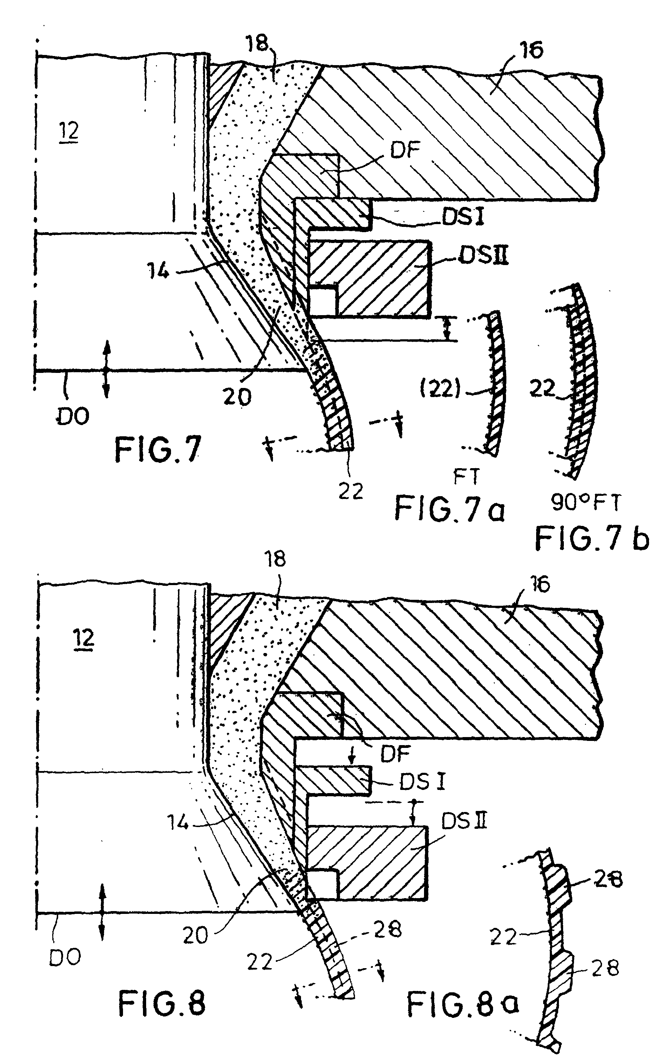

in Figur 7, Figur 8 und Figur 9 ist eine abgewandelte Ausführungsform eines erfindungsgemäßen Extrusionskopfes dargestellt. Hierbei ist die Sonderprofilierung (= Zahnprofilierung) nicht auf dem Düsenschieber DS I, sondern auf dem Düsenschieber DS II ausgebildet, während der Düsenschieber DS I zum Düsenspalt hin eine glatte umlaufende Oberfläche aufweist. In Fig. 7 sind die beiden Düsenschieber DS I und DS II in ihre oberste Stellung (außerhalb Wirkeingriff) gefahren und es wirken im Düsenspalt 20 nur die Oval-Profilierung des gehäusefesten Ringstückes DF und der verstellbare Dorn 14 auf den Schlauch 22. Die kleinen seitlichen Teilschnittdarstellungen deuten links eine dünnere Schlauchwanddicke (in Formteilungsebene FT) und rechts eine dickere Schlauchwandstärke (90° zur Formteilungsebene FT) an.
In Fig. 8 sind nun beide Düsenschieber DS I und DS II heruntergefahren. Der unten glatt umlaufende Düsenschieber DS I deckt die Oval-Profilierung des festen Ringstückes DF ab und macht sie dadurch unwirksam. Die Zahnprofilierung des unteren Düsenschiebers DS II wirkt im Düsenspalt 20 auf den austretenden Schlauch 22 ein und erzeugt die profilierte Schlauchausbildung mit den Längsrippen 28, wie in der kleinen Teilschnittdarstellung erkennbar ist.

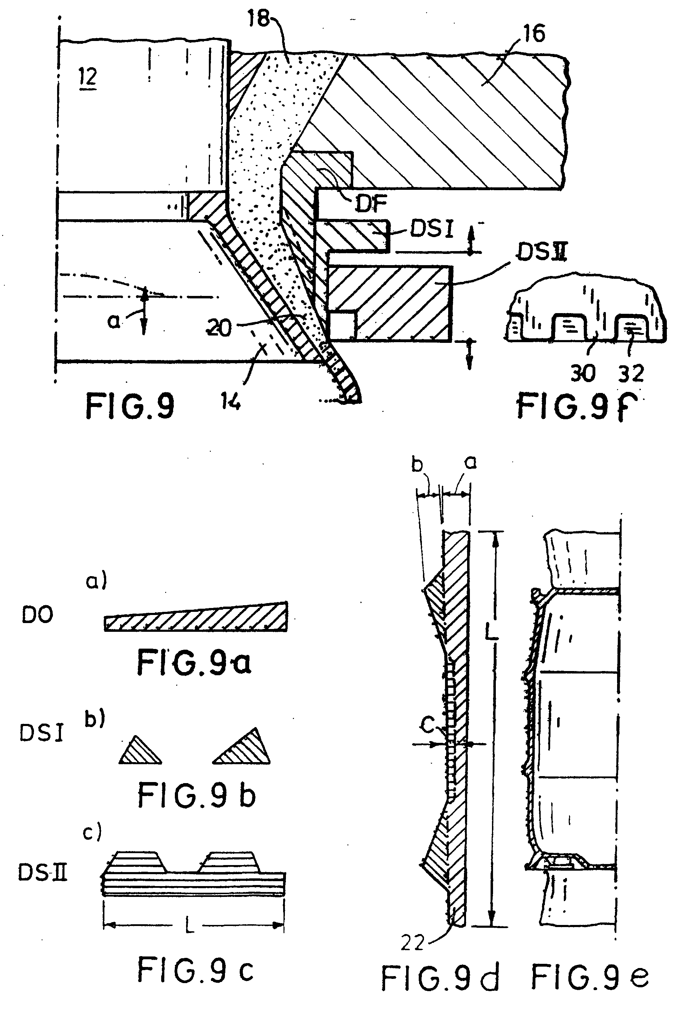

Fig. 9 zeigt nun eine Positionierung der Einstellelemente, bei der keine Profilierung wirksam ist, sondern durch Axialverschiebung des Dornes 14 nur eine über den Umfang des Schlauches gleichmäßige Veränderung der Wanddicke vorgenommen werden kann. Gemäß den in Fig. 9 unten links dargestellten Wanddicken-Diagrammen a, b und c, die für jedes Einstellelement ein separates Steuerungsprogramm darstellen, wird an der Blasformmaschine die Steuerung der Einstellelemente D 0, DS I und DS II zur gezielten Wanddickeneinstellung über die Länge L des austre-tenden Schlauches vorgenommen. Diagramm a zeigt - wie auch rechts daneben die Teilschnittdarstellung durch den ausgestoßenen Schlauch 22 - eine gleichmäßige Zunahme der Wanddicke von unten nach oben hin, die durch Öffnung des Düsenspaltes 20 durch axiales Verschieben des Dornes 14 nach unten vorgenommen wird. Die in Diagramm b gezeigte Zusatz-Wanddicke für den Faßober- und Unterboden wird durch die Oval-Profilierung im festen Düsen-Ringstück DF erzeugt, die durch ein Hochfahren des unprofilierten glatten Düsenschiebers DS I freigegeben wird. Der Zahnprofil-Düsenschieber DS II ist hierbei nicht wirksam. Für die Einstellung der Zahnprofilierung im Schlauch - z. B. für Längsrippen in den vertikalen Wandungsbereichen des rechts daneben dargestellten Spundfasses - wird der Düsenschieber DS II nach unten in Wirkeingriff gefahren. Dabei fährt auch der Düsenschieber DS I nach unten und die Profilierung des festen Ringstückes DF wird dabei wieder abgedeckt. Damit der Schlauch seine gleichmäßige Dicke beibehält, wird gleichzeitig auch der Dorn 14 etwas nach unten mitgefahren und der Düsenspalt je nach Bedarf geöffnet. Zur Erläuterung sei noch angemerkt, daß über den Düsenschieber mit der neuartigen Zahnprofilierung in aller Regel jeweils immer nur eine Umverteilung des Kunststoffmateriales im Düsenspalt erfolgt, wobei die freie Querschnittsfläche des Düsenspaltes konstant bleiben kann.

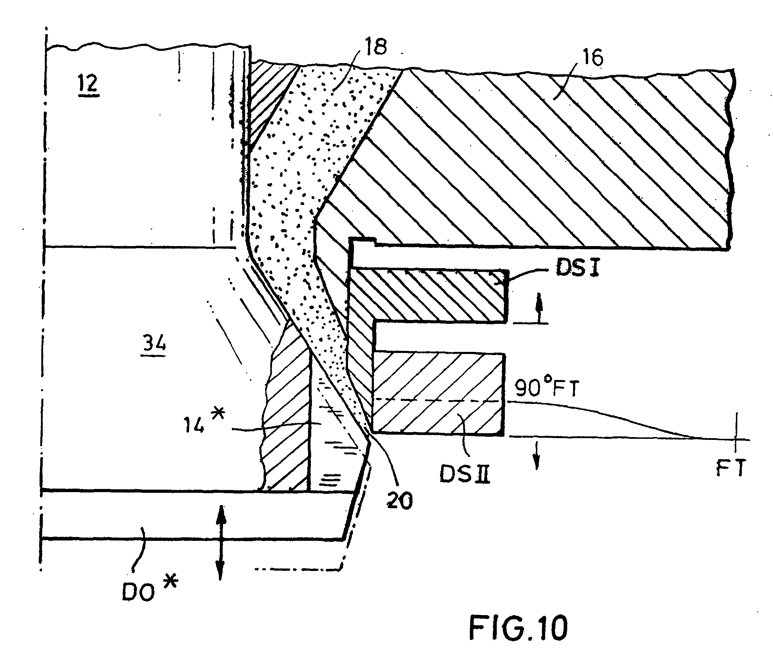

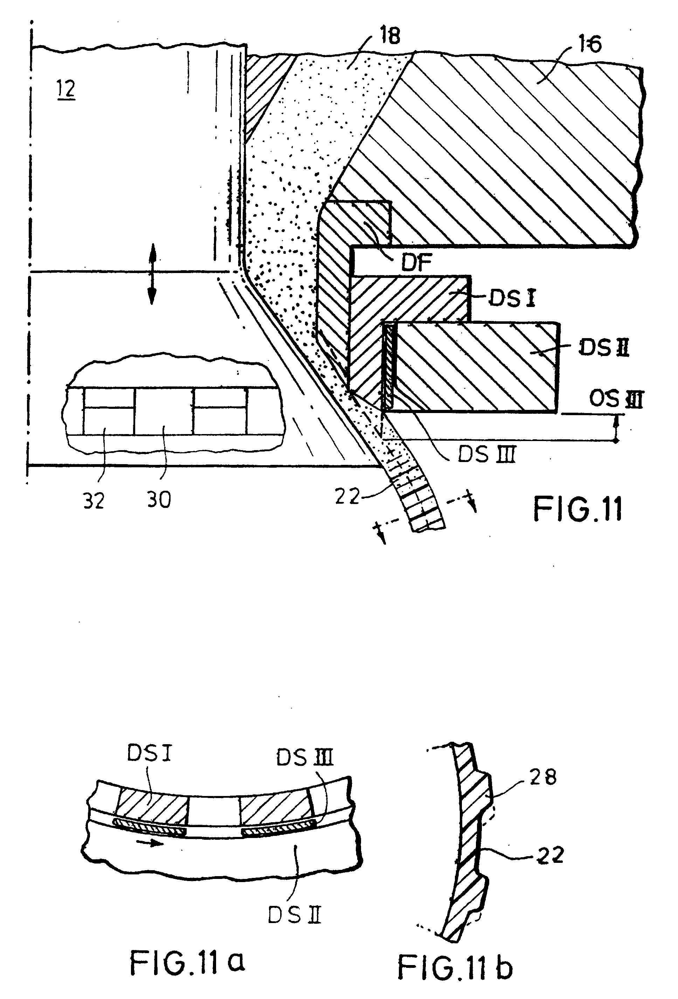

Eine andere Ausgestaltung eines erfindungsgemäßen Extrusionskopfes ist in Figur 10 gezeigt. Hierbei gibt es kein profiliertes gehäusefestes Ringstück und auch der Düsen-schieber DS I ist nicht profiliert, sondern weist eine glatte umlaufende innere Ober-fläche zum Düsenspalt 20 hin auf. Die bekannte Oval-Profilierung ist hier in den Düsenschieber DS II eingearbeitet. Hierbei weist ein auswechselbarer Dornkopf 34 eine besondere Form auf. Zum Oüsenspalt 20 hin sind am Außenumfang des Dornkopfes 34 eine Vielzahl von gleichmäßig voneinander beabstandete sternförmig abstehende Rippen 14* und dazwischenliegende Nuten ausgebildet. Unten am Dornkopf 34 sitzt nun das axial verstellbare Einstellelment D 0*, das außenseitig entsprechend geformte, nach oben stehende, gleichmäßig voneinander beabstandete Rippen und Nuten aufweist, die genau bündig die Nuten bzw. Zwischenräume zwischen den Rippen 14* ausfüllen. Wenn der Sternschieber = Einstellelement D 0* in seiner obersten Grundposition steht, schließen die Rippen des Sternschiebers D 0* im Düsenspalt 20 bündig mit den Rippen 14* des Dornkopfes 34 ab, so daß-durch die ineinandergreifenden Rippen des Dornkoples 34 im Düsenspalt eine glatte konische Oberfläche gebildet ist. Wenn dagegen der Sternschieber D 0* nach unten fährt, werden die Rippenzwischenräume bzw. Nuten des Dornkopfes 34 frei und die feststehenden Rippen 14* wirken im Dusenspalt auf den austretenden Schlauch 22. Dabei wird entsprechend der Geometrie der Rippen 14* ein Zahnprofil in die innere Oberfläche des Schlauches eingeformt. Mit einem Auf- und Abfahren des glatten unprofilierten Düsenschiebers DS I kann grundsätzlich gleichmäßig die Wanddicke des Schlauches eingestellt werden, während die Oval-Profilierung des Schlauches mit dem entsprechend profilierten Düsenschieber DS II bewirkt wird. Dabei fährt der Düsenschieber DS II in eine untere Position, wobei über den Düsenschieber DS I die Mindestwanddicke des Schlauches eingestellt ist. Dann bleibt DS II stehen und DS I fährt ein Stück nach oben, wobei die Oval-Profilierung in DS II freigegeben wird und der Schlauch an den beiden sich diametral gegenüber-liegenden Bereichen entsprechend dicker gefahren wird. Diese Konstruktion des Extrusionskopfes erlaubt am besten eine überlagerte Einwirkung der verschiedenen Einstellelemente auf den Schlauch.
Eine weitere Ausführungsform ist In Figur 11 gezeigt, wobei es sich hier um eine Abwandlung des in Fig. 6 dargestellten Extrusionskoptes handelt. Hierbei ist innenseitig im Düsenschieber DS II eine Ringhülse als Düsenschieber DS III in Umfangsrichtung verstellbar befestigt. Diese Ringhülse = DS III weist an ihrer Unterseite die gleiche Zahnprofilierung auf wie der innenseitig angeordnete Düsenschieber DS I. Zusätzlich ist der Düsenschieber DS II unten innen seitig etwas abgeschrägt. Wenn nun der Düsenschieber II zusammen mit der Ringhülse DS III nach unten gefahren wird und bündig mit dem Düsenschieber I abschließt, kann durch ein Verdrehen der Ringhülse die Verzahnung des Düsenschiebers DS I von der Seite her abgedeckt oder geöffnet werden. Auf diese Weise kann die Ausbildung der Rippenbreite auf dem austretenden Schlauch 22 kontinuierlich verändert bzw. nach Belieben eingestellt werden. Bei gleichzeitigem Auf- und Abfahren des Düsenschiebers DS II zusammen mit der Ringhülse DS III kann weiterhin die Höhe der Rippen 28 kontinuierlich verändert und eingestellt werden.

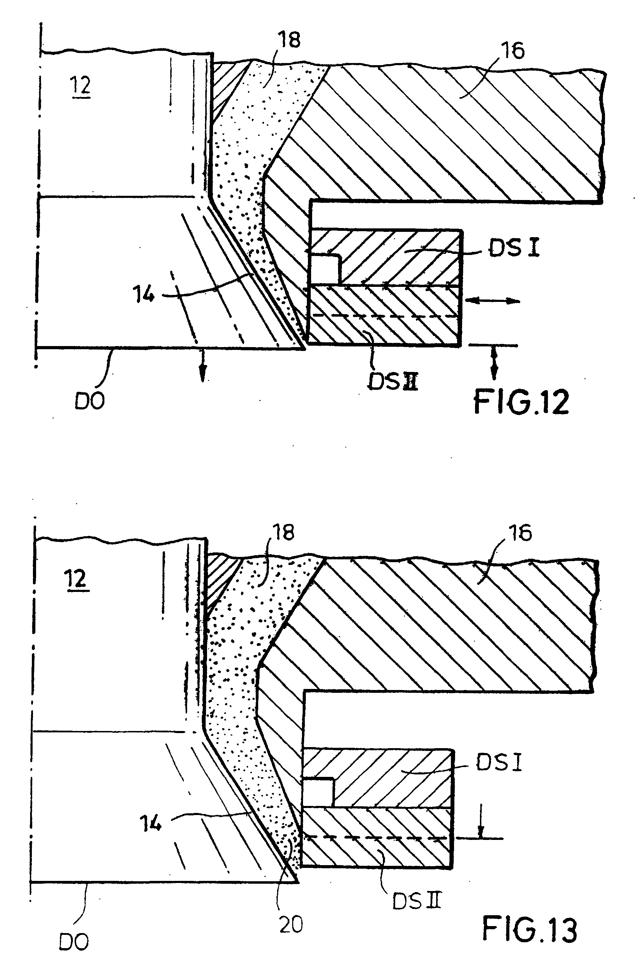

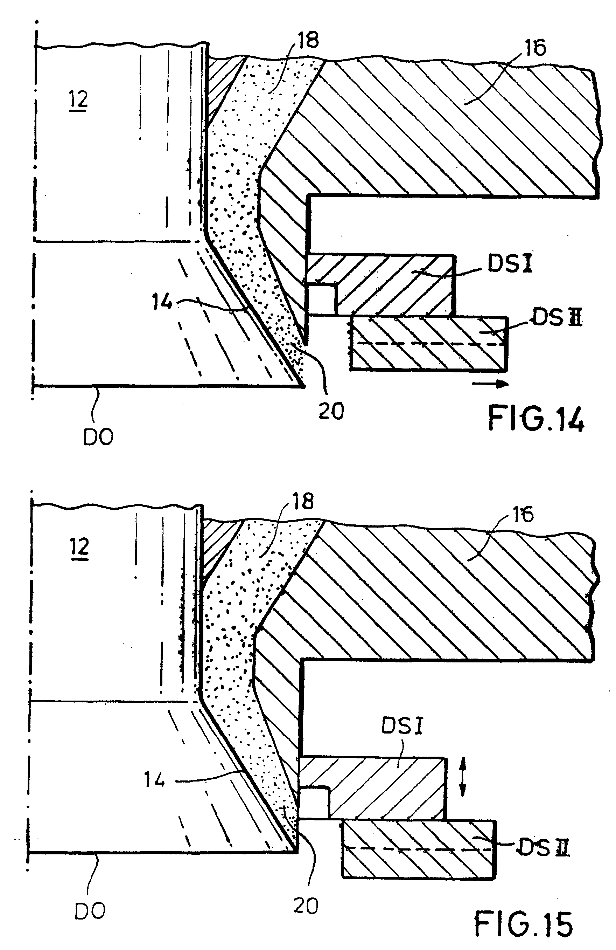

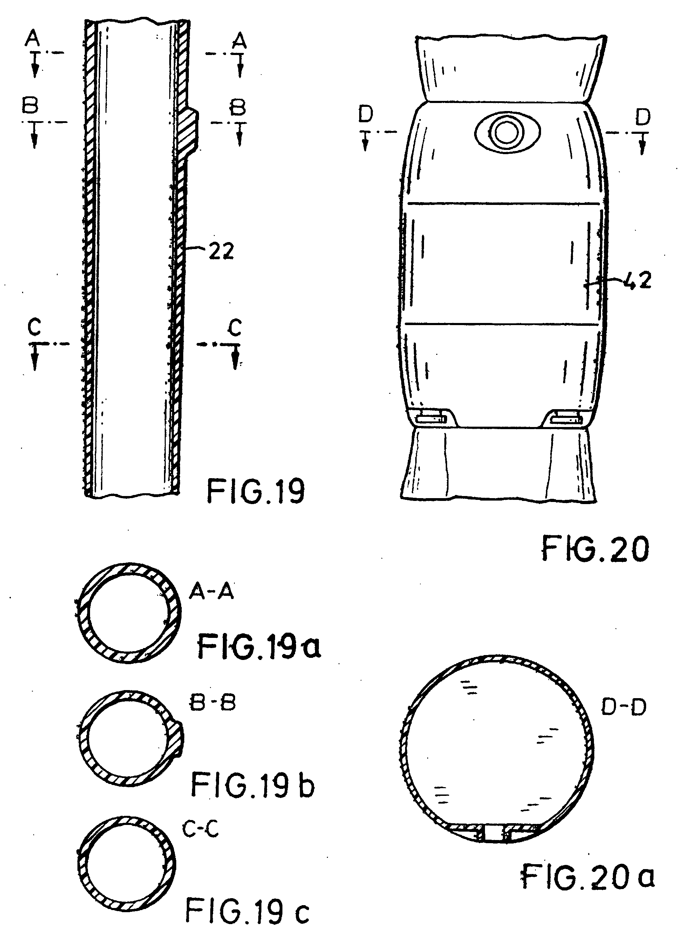

Schließlich ist in Figur 12, Figur 13, Figur 14 und Figur 15 ein weiterer vorteilhaft ausgestalteter Extrusionskopf dargestellt. Mit dem Einstellelement D 0 = Dorn 14 wird die über den Umfang gleichmäßige Wanddicke eingestellt. Ein profiliertes gehäusefestes Ringstück ist hierbei nicht vorgesehen, könnte aber bei Bedarf ebenfalls für eine weitere Sonderprofilierung installiert werden. Der Düsenschieber DS I weist die Zahnprofilierung auf und ist mit einer größeren Hublänge seines Verstellantriebes ausgestattet. Weiterhin ist der Düsenschieber DS II mit der Oval-Profilierung ausgestattet und dabei geteilt ausgebildet, d. h. er besteht im vorliegenden Falle aus zwei 180°-Halbringstücken, die am Düsenschieber DS I in Radialrichtung verschiebbar geführt und befestigt sind. In Fig. 12 sind alle Einstellelemente in Grundposition "Düsenspalt zu" gefahren. In Fig. 13 ist der Düsenspalt geöffnet wobei Dorn 14 nach unten gefahren ist. Auch der Düsenschieber DS I ist zusammen mit DS II axial nach unten gefahren, wobei der anhängende Düsenschieber DS II mit seiner Oval-Profilierung im Düsenspalt 20 auf den austretenden Schlauch einwirkt. In Fig. 14 sind die beiden Halbringstücke des Düsenschiebers DS II radial nach außen gefahren und befinden sich nicht mehr im Wirkeingriff. Nun wird - wie aus Fig. 15 ersichtlich ist - der Düsenschieber DS I um ein Stückchen weiter nach unten gefahren, bis seine Zahn- oder Sonderprofilierung in Wirkeingriff gelangt. Diese Konstruktion hat den Vorteil, daß für die Düsenschieber OS I und DS II lediglich ein einziger Hubantrieb benötigt wird. Die kurze Radialbewegung der DS II - Halbringe könnte z. B. von einem elektrischen Spindelmotor oder einem entsprechenden Kleinantrieb bewerkstelligt werden. Diese Ausführungsform eignet sich z. B. insbesondere für einen nachträglichen Einbau in vorhandene Extrusionsköpfe.
Die Einstellelemente aller Ausführungsvarianten sind grundsätzlich leicht austauschbar am Extrusionskopf befestigt. Der Düsenschieber mit der Zahnprofilierung kann selbstverständlich auch eine andere, je nach Anforderungen des zu erblasenden Hohlkörpers gewünschte Sonderprofilierung aufweisen (vgl. Fig. 19,20).

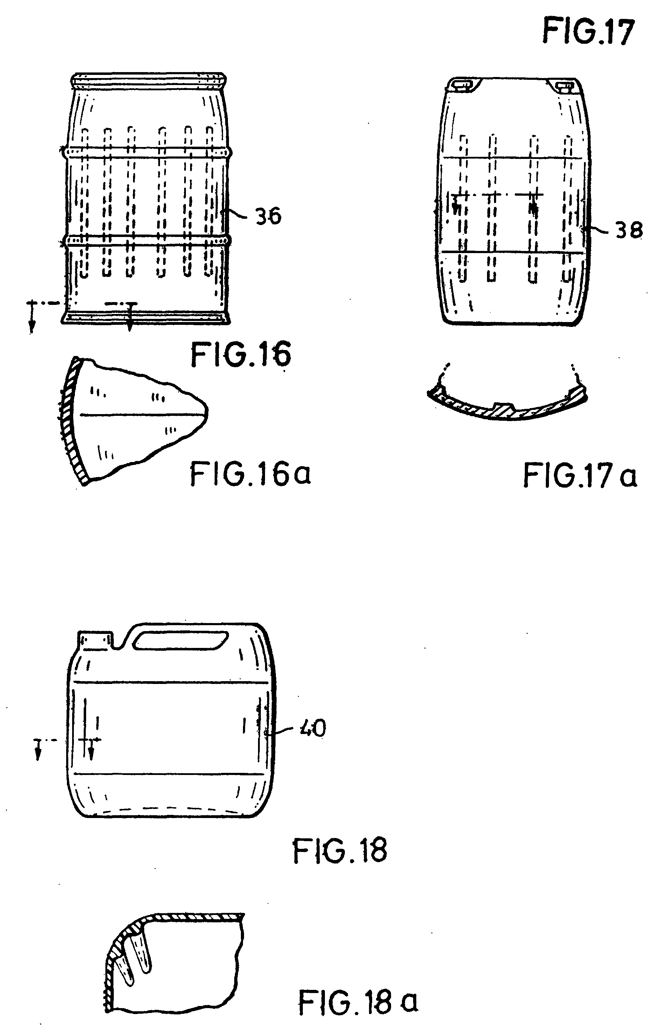

In Figur 16 ist ein 220 Liter Deckelfaß 36 angedeutet, bei dem in den vertikalen Wandungsbereichen gleichmäßig voneinander beabstandete Längsrippen ausgebildet sind, die sich aber nicht bis in den Bodenbereich hinein erstiecken, wie aus der darunter skizzierten Teilschnittdarstellung mit gleichbleibender Faßwandungsdicke ersichtlich ist.
Ausführungsbeispiel: Bei einem 220 Liter Kunststoff-Faß (z. 8. Vanguard-Deckelfaß) mit einem Faßkörpergewicht von ca. 7,5 kg weist der größte Durchmesser in der Faßwandung bzw. am Fußring etwa 575 mm auf. Der aus dem Düsenspalt austretende aufquellende Vorformling weist dazu einen Durchmesser von ca. 270 mm bei einer Wanddicke von ca. 12 bis 25 mm auf. Mittels der Einstellelemente kann die Wanddicke des Schlauches partiell oder bereichsweise in diesem Dickenbereich oder sogar noch größer eingestellt werden. Dabei ist das spezielle Einstellelement D 0* in vorteilhafter Weise mit einer rechteckförmigen Zahnprofilierung versehen, wobei der Durchmesser des Einstellelementes D 0* ca. 190 mm beträgt und die mit dem ausgestoßenen Schlauch in Wirkeingriff stehende innere oder äußere Ringkante abwechselnd ca. 60 in Querschnittsbetrachtung halbrunde Nuten und eine entsprechende Anzahl von rechteckförmigen Zähnen aufweist, wobei die Breite der Nuten ca. 4 mm und die Breite der Zähne ca. 5 mm beträgt. Die radiale Tiefe der Nuten beträgt dabei ca. 10 mm. Wichtig hierbei ist die Ausbitdung der rechteckförmigen Verzahnung; eine spitze Sägezahn-Verzahnung ist für die erfindungsge-mäßen großvolumigen Behälter mit einem Durchmesser von ca. 585 mm und einem Einsatzgewicht von ca. 8 bis 10 kg Kunststoffmaterial ungeeignet, weit die Erstreckung der dünneren Bereiche in Umfangsrichtung des Faßkörpers auf jeden Fall breiter sein müssen als die dickeren Bereiche (= internal ribs) in der axialen Faßwandung des fertig geblasenen Hohlkörpers.

Figur 17 zeigt ein Fassett 38, bei dem ausschließlich die vertikalen Wandungsbereiche durch Längsrippen verstärkt ausgebildet sind. Diese Länsverrippung wird aus der Teilschnittdarstellung durch die Behälterwandung deutlich.
Figur 18 zeigt einen Kanister 40, bei dem nur in den Eckbereichen zwei Längsrippen ausgebildet sind, die sich hierbei - wie in der Teilschnittdarstellung darunter angedeutet ist - allerdings bis in den Ober- und Unterboden hinein erstrecken.
Ein schlauchförmiger Vorformling 22 mit Sonderprofilierung ist in Figur 19 in Längsund Querschnittsdarstellung für einen K'stoff-Kraftstoff-Behälter KKB 42 gezeigt, der in Figur 20 noch mit anhängenden Butzenstücken dargestellt ist.
Mit dem erfindungsgemäßen Extrusionskopf mit drei separaten Einstell -Systemen können gerade solche Sonderprofilierungen mit partiellen Materialanhäufungen (vgl. Schnitt B-B in Fig 19) wie sie z. B. für den KKB 42 im Bereich einer Stutzenöffnung (vgl. Schnitt D-D in Fig. 20) benötigt wird, besonders gut gefahren bzw. erzeugt werden.

### Bezugsziffernliste

- 10: Extrusionskopf
- 12: Dornhalter
- 14: Dorn = D 0 (Dnull)
- 16: Extrusionskopf-Gehäuse
- 18: Speicherraum
- 20: Düsenspalt
- 22: schlauchförmiger Vorformling
- 24: innere Kante DS II
- 26: dickerer Schlauchbereich
- 28: Rippen in 22
- 30: Zahn
- 32: Zahnlücke
- 34: Dornkopf für 14*
- 36: Deckelfaß (Vanguard FRH-Drum)
- 38: Fassett®
- 40: Kanister
- 42: K'stoff-Kraftstoff-Behälter (KKB)

### Düse/Dornspalt-Einstellelemente :

- DF: festes Düsen-Ringstück
- D 0: erstes Einstellelement = Dorn 14
- DS I: zweites Einstellelement = Düsenschieber 1
- DS II: drittes Einstellelement = Düsenschieber 2
- DS III: viertes Einstelletement = drehbare Ringhülse
- D 0*: sternförmiges Einstellelement am Dorn 14

## Patentansprüche

1. Extrusionskopf zur Erzeugung eines schlauchförmigen Vorformlinges für die Herstellung von blasgeformten Kunststoff-Hohlkörpern, mit einer verstellbaren ringförmigen Schlauchaustrittsdüse mit kreisringförmig umlaufenden Düse/Dornspalt-Einstellelementen (D0, DS I) die eine gezielte Einstellung des Düsenspaltes zur Veränderung der Wanddicke des austretenden Vorformlinges ermöglichen,
**dadurch gekennzeichnet, daß**
wenigstens drei separate, unterschiedlich profilierte, austauschbare Düse/Dornspalt-Einstellelemente (D0 = Dorn, DS I, DS II, DS III) vorgesehen sind, die einzeln oder/und gleichzeitig im Düsenspalt von innen oder/und außen in Wirkeingriff auf den austretenden Vorformling bringbar sind, wobei wenigstens zwei der Einstellelemente (D 0 = Dorn, DS I, DS II, DS III) verstellbar ausgebildet und dazu mit jeweils einem Verstellantrieb ausgestattet sind.

2. Extrusionskopf nach Anspruch 1,
**dadurch gekennzeichnet, daß**
das dritte zusätzliche Einstellelement (DS II) für die Einstellung einer Sonderprofilierung (z. B. Zahnprofil) unterhalb des Einstellelement (DS I) angeordnet ist und als letzte Wanddickenbeeinflussung auf den austretenden Schlauch einwirkbar ist.

3. Extrusionskopf nach Anspruch 1 oder 2,
**dadurch gekennzeichnet, daß**
die unterste innere Kante des dritten Einstellelementes (DS II), die mit dem austretenden Schlauch in Eingriff bringbar ist, etwa in gleicher Höhe oder geringfügig oberhalb der untersten äußeren Kante des zentralen Dornes (D 0) angeordnet ist.

4. Extrusionskopf nach Anspruch 1, 2 oder 3,
**dadurch gekennzeichnet, daß**
das dritte Einstellelement (DS II) mit einem eigenen Verstellantrieb versehen und in Axialrichtung verschiebbar bzw. verstellbar geführt ist.

5. Extrusionskopf nach Anspruch 4,
**dadurch gekennzeichnet, daß**
das die Einstellelemente (D 0, D 0*, DS I, DS II, DS III) mit einer Schnell-Befestigung versehen und leicht auswechselbar ausgebildet sind.

6. Extrusionskopf nach einem der vorhergehenden Ansprüche 1 bis 5,
**dadurch gekennzeichnet, daß**
das dritte Einstellelement (DS II) geteilt ausgebildet ist und aus zwei 180° Halbring-Teilstücken besteht, die mit einem eigenen Verstellantrieb versehen und in Radialrichtung verschiebbar bzw. verstellbar geführt sind.

7. Extrusionskopf nach einem der vorhergehender Ansprüche 1 bis 6,
**dadurch gekennzeichnet, daß**
zwischen Einstellelement (DS I) und Einstellelement (DS II) ein weiteres Einstellelement (DS III) angeordnet und verstellbar, z. B. in Umfangsrichtung verdrehbar gelagert ist.

8. Extrusionskopf nach Anspruch 7,
**dadurch gekennzeichnet, daß**
das Einstellelemnt (DS III) die gleiche Sonderprofilierung (z. B. Zahnprofil) wie das Einstellelement (DS I) aufweist.

9. Extrusionskopf nach einem der vorhergehenden Ansprüche 1 bis 8,
**dadurch gekennzeichnet, daß**
das am Dornhalter (12) axial verstellbar gelagerte Einstellelement D 0* mit einer Sonderprofilierung (z. B. Zahnprofil) ausgestattet ist.

10. Extrusionskopf nach Anspruch 9,
**dadurch gekennzeichnet, daß**
das Einstellelement (D 0*) mit der Sonderprofilierung (z. B. Zahnprofil), das Einstellelement (DS I) ohne Profilierung umlaufend glatt durchgehend und das Einstellelement (DS II) mit einer an sich bekannten Oval-Profilierung ausgestattet ist.

11. Extrusionskopf nach einem der vorhergehenden Ansprüche 1 bis 10,
**dadurch gekennzeichnet, daß**
das Einstellelement (D 0*) mit einer rechteckförmigen Zahnprofilierung versehen ist, wobei - für ein 220 Liter Kunststoff-Faß (55 US-Gall.) mit einem Außendurchmesser von ca. 585 mm bei einem Faßgewicht von ca. 9,5 kg - der Durchmesser des Einstellelementes ca. 190 mm beträgt und die mit dem ausgestoßenen Schlauch in Wirkeingriff stehende innere oder äußere Ringkante abwechselnd ca. 60 in Querschnittsbetrachtung halbrunde Nuten und eine entsprechende Anzahl von rechtecktörmigen Zähnen aufweist, wobei die Breite der Nuten schmaler ausgebildet ist als die Breite der Zähne.

12. Extrusionskopf nach Anspruch 11,
**dadurch gekennzeichnet, daß**
die Breite der Zähne ca. 5 mm und die Breite der Nuten ca. 4 mm beträgt, bei einer radialen Tiefe der Nuten von ca. 10 mm.

## Claims

1. Extrusion head for producing a tubular preform in order to manufacture blow-moulded plastic hollow bodies, with an adjustable ring-shaped tube outlet nozzle with nozzle/mandrel-opening adjusting elements (D0, DS I) running around in the form of a circular ring, which permit selective adjustment of the nozzle opening in order to alter the wall thickness of the exiting preform, **characterized in that** at least three separate, differently profiled, exchangeable nozzle/mandrel-opening adjusting elements (D 0 = mandrel, DS I, DS II, DS III) are provided, which can be individually and/or simultaneously brought into working contact with the exiting preform in the nozzle opening from inside and/or outside, at least two of the adjusting elements (D 0 = mandrel, DS I, DS II, DS III) being configured such that they can be adjusted and, for this purpose, each equipped with an adjusting drive.

2. Extrusion head according to Claim 1, **characterized in that** the third additional adjusting element (DS II) for the adjustment of a special profiling (for example tooth profile) is arranged under the adjusting element (DS I) and can be made to act on the exiting tube as the last influence on the wall thickness.

3. Extrusion head according to Claim 1 or 2, **characterized in that** the lowermost inner edge of the third adjusting element (DS II), which can be brought into engagement with the exiting tube, is arranged approximately at the same height or slightly above the lowermost outer edge of the central mandrel (D 0).

4. Extrusion head according to Claim 1, 2 or 3, **characterized in that** the third adjusting element (DS II) is provided with its own adjusting drive and is guided such that it can be displaced or adjusted in the axial direction.

5. Extrusion head according to Claim 4, **characterized in that** the adjusting elements (D 0, D 0*, DS I, DS II, DS III) are provided with a quick-action fastening and are designed such that they can be easily exchanged.

6. Extrusion head according to one of the preceding Claims 1 to 5, **characterized in that** the third adjusting element (DS II) is of a split design and comprises two 180° half-ring pieces, which are provided with an adjusting drive of their own and are guided such that they can be displaced or adjusted in the radial direction.

7. Extrusion head according to one of the preceding Claims 1 to 6, **characterized in that** between adjusting element (DS I) and adjusting element (DS II) a further adjusting element (DS III) is arranged and adjustably mounted, for example such that it can turn in the circumferential direction.

8. Extrusion head according to Claim 7, **characterized in that** the adjusting element (DS III) has the same special profiling (for example tooth profile) as the adjusting element (DS I).

9. Extrusion head according to one of the preceding Claims 1 to 8, **characterized in that** the adjusting element D 0* mounted axially adjustably on the mandrel holder (12) is equipped with a special profiling (for example tooth profile).

10. Extrusion head according to Claim 9, **characterized in that** the adjusting element (D 0*) is equipped with the special profiling (for example tooth profile), the adjusting element (DS I) is without profiling, smooth all round throughout, and the adjusting element (DS II) is equipped with an oval profiling known per se.

11. Extrusion head according to one of the preceding Claims 1 to 10, **characterized in that** the adjusting element (D 0*) is provided with a rectangular tooth profiling, the diameter of the adjusting element being about 190 mm - for a 220 litre plastic drum (55 US gallons) with an outside diameter of about 585 mm in the case of a drum weight of about 9.5 kg -, and the inner or outer ring edge in working contact with the discharged tube alternately having about 60 grooves, half-round when viewed in cross section, and a corresponding number of rectangular teeth, the width of the grooves being made narrower than the width of the teeth.

12. Extrusion head according to Claim 11, **characterized in that** the width of the teeth is about 5 mm and the width of the grooves about 4 mm, in the case of a radial depth of the grooves of about 10 mm.

## Revendications

1. Tête d'extrusion pour la production d'une ébauche en forme de gaine pour la fabrication de corps creux en matière plastique formés par soufflage, avec une buse annulaire réglable de sortie de gaine avec des éléments tournants en forme de cercle de réglage de la fente buse/mandrin (D 0, DS I) qui permettent un réglage ciblé de la fente de la buse en vue de modifier l'épaisseur de paroi de l'ébauche sortante, **caractérisée en ce qu'**il est prévu au moins trois éléments séparés de réglage de la fente buse/mandrin (D 0 = mandrin, DS I, DS II, DS III), échangeables, profilés de façon différente, qui peuvent, individuellement ou/et simultanément, être mis en prise active sur l'ébauche sortante dans la fente de la buse, de l'intérieur ou/et de l'extérieur, dans laquelle au moins deux des éléments de réglage (D 0 = mandrin, DS I, DS II, DS III) sont réglables et sont à cet effet équipés d'une commande de réglage.

2. Tête d'extrusion suivant la revendication 1, **caractérisée en ce que** le troisième élément de réglage additionnel (DS II) est disposé en dessous de l'élément de réglage (DS I) pour le réglage d'un profilage particulier (par exemple profil denté) et peut être engagé sur la gaine sortante comme dernier moyen pour influencer l'épaisseur de paroi.

3. Tête d'extrusion suivant la revendication 1 ou 2, **caractérisée en ce que** l'arête intérieure la plus basse du troisième élément de réglage (DS II), qui peut être mise en prise avec la gaine sortante, est disposée environ à la même hauteur ou légèrement plus haut que l'arête extérieure la plus basse du mandrin central (D 0).

4. Tête d'extrusion suivant la revendication 1, 2 ou 3, **caractérisée en ce que** le troisième élément de réglage (DS II) est pourvu d'une commande de réglage propre et est guidé de manière coulissante ou réglable en direction axiale.

5. Tête d'extrusion suivant la revendication 4, **caractérisée en ce que** les éléments de réglage (D 0, D 0*, DS I, DS II, DS III) sont pourvus d'une fixation rapide et sont configurés de façon aisément remplaçable.

6. Tête d'extrusion suivant l'une quelconque des revendications précédentes 1 à 5, **caractérisée en ce que** le troisième élément de réglage (DS II) est divisé et se compose de deux pièces partielles semi-annulaires de 180°, qui sont pourvues d'une commande de réglage propre et qui sont guidées de manière coulissante ou réglable en direction radiale.

7. Tête d'extrusion suivant l'une quelconque des revendications précédentes 1 à 6, **caractérisée en ce qu'**un autre élément de réglage (DS III) est disposé entre l'élément de réglage (DS I) et l'élément de réglage (DS II) et est supporté de façon réglable, par exemple de façon rotative dans le sens périphérique.

8. Tête d'extrusion suivant la revendication 7, **caractérisée en ce que** l'élément de réglage (DS III) présente le même profilage particulier (par exemple un profil denté) que l'élément de réglage (DS I).

9. Tête d'extrusion suivant l'une quelconque des revendications précédentes 1 à 8, **caractérisée en ce que** l'élément de réglage (D 0*) supporté de façon réglable axialement sur le porte-mandrin (12) est muni d'un profilage particulier (par exemple un profil denté).

10. Tête d'extrusion suivant la revendication 9, **caractérisée en ce que** l'élément de réglage (D 0*) est muni du profilage particulier (par exemple un profil denté), l'élément de réglage (DS I) sans profilage est lisse de façon ininterrompue en périphérie et l'élément de réglage (DS II) est muni d'un profilage ovale connu en soi.

11. Tête d'extrusion suivant l'une quelconque des revendications précédentes 1 à 10, **caractérisée en ce que** l'élément de réglage (D 0*) est pourvu d'un profilage denté de forme rectangulaire, dans laquelle - pour un tonneau en matière plastique de 220 litres (55 gallons US) avec un diamètre extérieur d'environ 585 mm et un poids de tonneau d'environ 9,5 kg - le diamètre de l'élément de réglage vaut environ 190 mm et l'arête annulaire intérieure ou extérieure se trouvant en prise active avec la gaine éjectée présente en alternance environ 60 rainures semi-circulaires, considérées en section transversale, et un nombre correspondant de dents de forme rectangulaire, la largeur des rainures étant plus petite que la largeur des dents.

12. Tête d'extrusion suivant la revendication 11, **caractérisée en ce que** la largeur des dents vaut environ 5 mm et la largeur des rainures environ 4 mm, avec une profondeur radiale des rainures d'environ 10 mm.
